# EUROPÄISCHE PATENTSCHRIFT

(11) **EP 3 271 785 B1**
(45) Veröffentlichungstag und Bekanntmachung des Hinweises auf die Patenterteilung: **21.04.2021**
(21) Anmeldenummer: 16712003.9
(22) Anmeldetag: 17.03.2016
(51) Int. Cl.: G05B 23/02

(54) **DATENAUSTAUCH ZWISCHEN EINER MASCHINE UND EINEM EXTERNEN STEUERMODUL IN DER GETRÄNKEMITTELINDUSTRIE**
DATA EXCHANGE BETWEEN A MACHINE AND AN EXTERNAL CONTROL MODULE IN THE BEVERAGE INDUSTRY
ÉCHANGE DE DONNÉES ENTRE UNE MACHINE ET UN MODULE DE COMMANDE EXTERNE DANS L'INDUSTRIE DES BOISSONS

(30) Priorität: 18.03.2015 DE 102015204922
(43) Veröffentlichungstag der Anmeldung: 24.01.2018
(73) Patentinhaber: Krones AG, 93073 Neutraubling (DE)
(72) Erfinder: HOFERER, Maximilian, 93073 Neutraubling (DE); BIELMEIER, Theodor, 93073 Neutraubling (DE)
(74) Vertreter: Grünecker Patent- und Rechtsanwälte PartG mbB
(86) Internationale Anmeldenummer: PCT/EP2016/055824
(87) Internationale Veröffentlichungsnummer: WO 2016/146756

(56) Entgegenhaltungen:
- DE-A1-102012 216 770
- GB-A- 2 513 000
- US-A1- 2008 065 243

## Beschreibung

Die Erfindung betrifft eine Vorrichtung zum Steuern einer Maschine in der Getränkemittelindustrie, insbesondere einer Abfüll-, Etikettier- oder Verpackungsmaschine, gemäß dem Oberbegriff des Anspruchs 1, ein Verfahren zum Steuern einer Maschine in der Getränkemittelindustrie gemäß dem Oberbegriff des unabhängigen Anspruchs 6 und ein externes Steuermodul, insbesondere einem Mobilgerät, zum Austauschen von Daten mit einer Maschine in der Getränkemittelindustrie gemäß dem Oberbegriff des unabhängigen Anspruchs 9.

### Stand der Technik

In der Getränkemittelindustrie werden für Maschinen wie beispielsweise Abfüll-, Etikettier- oder Verpackungsmaschinen Human-Maschine-Interface-Module (HMI Module) zur Steuerung durch einen Benutzer eingesetzt. Durch komplexer werdende Maschinen und Industrieanlagen wird auch die Steuerung von solchen Maschinen aufwändiger und komplizierter. Fehler, die durch eine falsche Bedienung einer industriellen Anlage auftreten, können einen enormen Schaden und hohe Kosten verursachen. Daraus ergibt sich der Wunsch, die Bedienbarkeit von Maschinen bzw. Prozessanlagen übersichtlich zu gestalten und gegeben falls anzupassen. Ein Mittel zur teilweisen Steuerung von Industrieanlagen sind HMIs, welche üblicherweise einen Anzeigebildschirm mit einer grafischen Oberfläche und einen oder mehrere Bedienelemente haben. Alternative kann der Anzeigebildschirm ein berührungsempfindlicher Bildschirm sein, bei dem Benutzereingaben direkt über den Anzeigebildschirm mittels eines Finger oder eines Stylus erfolgen. Der Benutzer kann über das HMI verschiedene Einstellungen und Steuerungen der Industrieanlage vornehmen. Auch können Statusinformationen zu der Industrieanlage aus dem HMI auslesen.

Ein solches HMI wird bevorzugt an die Steuerung einer vorgegebenen oder geänderten Umgebung bzw. Maschineneinstellung angepasst und gegebenenfalls personalisiert. Auch ein schon fertig konfiguriertes HMI muss regelmäßig aktualisiert werden, wenn sich beispielsweise ein Prozess ändert, wenn neue oder andere Produkte mittels der Industrieanlage hergestellt werden und so weiter. Eine solche Konfiguration und/oder Aktualisierung der Konfiguration des HMI erfolgt bisher durch manuelle Zuführung der erforderlichen Daten mittels eines tragbaren Speichersticks, die vom Benutzer mit dem HMI verbunden werden. Beispielsweise werden Bilder zu Fehlermeldungen oder Bilder zu aktuell hergestellten Produkten auf einem USB-Speicherstick gespeichert, welcher dann in ein entsprechendes USB-Interface des HMI gesteckt wird, um die Bilddateien an das HMI zu übertragen. Auch die Auswertung oder Dokumentation von Daten einer Industrieanlage erfolgt bisher mittels eines solchen Speichersticks. Dazu speichert das HMI Statusinformationen und andere festgelegte Daten auf den Speicherstick.

Diese Vorgehensweise hat jedoch den Nachteil, dass die Übertragung von verschieden Daten wie etwa Bilder zu Meldungen oder Sorten nur unzureichend und zeitaufwendig an das HMI übertragen werden können. Darüber hinaus bergen tragbare Speichermedien wie USB-Speichersticks ein als Sicherheitsrisiken und sind Schleuse für schädlichen Softwarecode, wie beispielsweise Viren, Malware, Trojaner usw. Auch ein einfaches Auslesen von sensiblen Daten durch unberechtigte Personen mittels Speicherstick ist auf diese Weise möglich.

Ein weiterer Nachteil bei der herkömmlichen Konfiguration des HMI ergibt sich aus dessen begrenzten Speicher- und Verarbeitungsressourcen. Die mittels USB-Speicherstick zugeführten Daten und Parameter können nicht entweder gar nicht oder nur in sehr begrenztem Umfang von mit HMI nachverarbeitet werden. Eine Anpassung mittels der Benutzeroberfläche des HMI darüberhinaus sehr zeitaufwendig, da ein HMI für gewöhnlich nicht dafür ausgelegt ist, dass ein Benutzer über das HMI dessen intern gespeicherten Daten oder Daten auf einem angeschlossen Speicherstick zugreift anzupassen. Die Daten, die in das HMI geladen werden sollen, müssen daher bereits in der richtigen Formatierung auf dem Speicherstick gespeichert sein, denn eine nachträgliche Bearbeitung der Daten in dem HMI ist nicht oder nur schwer möglich Ein solcher Steuermodul ist aus GB 2 513 000 A und US 2008/065243 bekannt.

### Aufgabe

Es ist somit Aufgabe der Erfindung, eine Vorrichtung und ein Verfahren zum Übertragen von Daten an oder von einem HMI einer Maschine in der Getränkemittelindustrie, insbesondere einer Abfüll-, Etikettier- oder Verpackungsmaschine, zu verbessern, insbesondere hinsichtlich der Effizienz und der Sicherheit des Datenaustauschs mit dem HMI zum Konfigurieren des HMIs oder zum Auslesen von Daten aus dem HMI.

### Lösung

Die Aufgabe wird erfindungsgemäß durch ein Verfahren nach Anspruch 4 und einem externen Steuermodul nach Anspruch 1 gelöst. Vorteilhafte Ausführungsformen und Weiterbildungen sind Gegenstand der Unteransprüche.

Erfindungsgemäße Ausführungsformen werden anhand der nachfolgenden Zeichnungen beschrieben. Es zeigen:
**Figur 1** ein System in einer industriellen Umgebung, in welcher eine Industrieanlage mittels eines HMI gesteuert wird und das HMI gemäß einer Ausführungsform der Erfindung durch ein externes Steuermodul konfiguriert wird;
**Figur 2** ein System in einer industriellen Umgebung, in welcher eine Industrieanlage mittels eines HMI gesteuert wird und das HMI gemäß einer Ausführungsform der Erfindung durch ein externes Steuermodul konfiguriert wird, wobei das externe Steuermodul Zugriff auf einen Server hat; und
**Figur 3** ein Ablaufdiagramm für ein Verfahren zum Datentransfer zwischen einem HMI und einem externen Steuermodul, gemäß einer Ausführungsform der Erfindung.

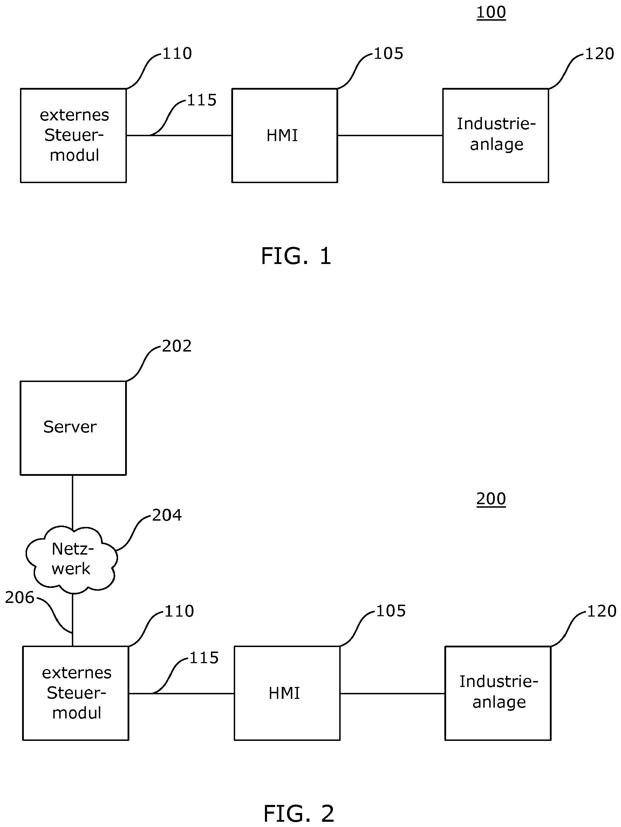

Figur 1 zeigt ein beispielhaftes System in einer industriellen Umgebung 100, in der eine Industrieanlage oder Maschine 120 mittels eines HMI 105 gesteuert wird. Die Industrieanlage 120 kann eine Vielzahl von Maschinen und Maschinenelementen umfassen, die mittels eines zentralen HMI oder mittels mehreren HMIs gesteuert werden. Ein Beispiel für eine solche Industrieanlage 120 kann eine Getränkeabfüllanlage sein, aber auch jede andere Umgebung, die mittels eines HMI gesteuert wird. Weitere Beispiele für eine Maschine, auf die die Ausführungsformen der Erfindung angewendet werden können, sind eine Abfüllmaschine, eine Etikettiermaschine, eine Verpackungsmaschine, eine Blasmaschine, eine Streckblasmaschine, eine Reinigungsmaschine, ein Transportsystem, eine Verschließmaschine, eine Fremdstofferkennungsmaschine, und ähnliche Maschinen der Getränke- und Lebensmittelindustrie.

Das HMI 105 kann sowohl Teil der Industrieanlage 120 sein, als auch ein externes HMI sein, welches an die Industrieanlage 120 angeschlossen ist. Beispielsweise kann das HMI 105 über ein industrielles Netzwerkprotokoll mit der Industrieanlage 120 verbunden sein. Das HMI kann von einem Benutzer zur Überwachung oder Steuerung der Maschinen genutzt werden. Beispielsweise kann ein HMI einen Touchscreen umfassen, um eine Interaktion zwischen Maschine und einem Benutzer zu erleichtert.

Benutzer können über das HMI 105 mit der Industrieanlage 120 interagieren. Das kann bedeuten, dass Benutzer bestimmte Prozesse der Industrieanlage 120 über das HMI 105 starten, beenden, individualisieren, konfigurieren, anhalten können usw. Zusätzlich können Benutzer über das HMI 105 auch Daten über die Industrieanlage 120 auslesen. Beispielsweise kann das HMI 105 Statusmeldungen, Diagnoseinformationen, Produktionssorten (z.B. Getränkesorten in der Abfüllung), Reports, Fehlermeldungen, Analysen, Statistiken, usw. anzeigen.

Um das HMI 105 auf die Anforderungen, Besonderheiten und Gegebenheiten der Industrieanlage 120 anzupassen, wird ein externes Steuermodul 110 über eine Datenverbindung 115 mit dem HMI 105 verbunden. Die Datenverbindung 115 zwischen dem externen Steuermodul 110 und dem HMI 105 kann dabei sowohl eine drahtlose (z.B. Bluetooth, Wibree, WLAN, RFID, NFC, Infrarot, GSM, ZigBee, WiMAX, usw.), wie auch eine drahtgebundene (z.B. USB, FireWire, LAN, serieller Datenbus, Lichtwellenleiter, usw.) Datenverbindung sein.

Das externe Steuermodul 110 kann dabei Mittel zur Datenübertragung in das HMI 105 und zum Datenempfang von dem HMI 105 aufweisen. Die Daten, welche zwischen dem HMI 105 und dem externen Steuermodul 110 ausgetauscht werden, werden hierin allgemein als HMI-Datensatz oder HMI-Datensätze bezeichnet. In der Regel ist ein HMI-Datensatz, der von dem externen Steuermodul 110 in das HMI 105 geladen wird jedoch anderer Art wie ein HMI-Datensatz, der von dem HMI 105 in das externen Steuermodul 110 geladen wird.

Beispielsweise werden von einem Techniker HMI-Datensätze von dem externen Steuermodul 110 zum Konfigurieren des HMI 150 in das HMI 150 geladenen. Solche HMI-Konfigurationsdatensätze können beispielsweise Bilder sein (z.B. von Produktionserzeugnissen, von Meldungen, von Logos, von Anleitungen und Anweisungen usw.), aber auch spezielle Textmeldungen (z.B. Fehlermeldungen und Anweisungen für bestimmte Situationen) und/oder ausführbare HMI-Datensätze (z.B. Steuerbefehle, Firmware, oder Visualisierungsprojekte des HMI 150 usw.).

Prinzipiell jedoch lassen sich alle Dateien in das HMI 105 übertragen und können auch alle Dateien von dem HMI 105 durch das externe Steuermodul 110 ausgelesen und heruntergeladen werden. Die zu übertragenden Dateien in eine Richtung sind daher nicht auf die obigen Beispiele beschränkt. Es können beispielsweise auch einzelne Bilder von dem HMI 105 in das externe Steuermodul 110 geladen werden.

Gemäß einer Ausführungsform wird der HMI-Datensatz in dem externen Steuermodul 110 vorverarbeitet, bevor sie über die Datenverbindung 115 in das HMI 105 übertragen werden. So kann beispielsweise das HMI 105 nur bestimmte Dateiformate öffnen und/oder verarbeiten, die speziell für HMIs geeignet sind. Beispielsweise kann ein Betriebssystem des HMI 105 nur bestimmte Bilddateien oder generell nur proprietäre Dateiformate verarbeiten. Das externe Steuermodul 110 kann in so einem Fall ein Dateiformat eines zu übertragenden Bildes oder einer anderen Datei in das benötigte Dateiformat für das HMI 105 umwandeln, bevor es in das HMI 105 übertragen wird.

Auch der Inhalt von einem zu übertragenden HMI-Datensatz kann mittels des externen Steuermoduls 110 bearbeitet werden. Zum Beispiel kann ein Bild oder Foto vor der Übertragung bearbeitet werden, oder ein Text kann editiert werden usw.

Eine weitere Ausführungsform der Industrieanlage 120 ist beispielhaft anhand einer Anlage zum Befüllen von Flaschen beschrieben. Zur Konfiguration des HMI 105 kann es in diesem Fall vorteilhaft sein, wenn das HMI 105 Bilder von verschiedenen Sorten und Flaschen anzeigen kann, welche für die verschiedenen Befüllvorgänge relevant sind. Mittels des externen Steuermoduls 110 können ein oder mehrere Fotos von Etiketten und/oder von Flaschen in das HMI 105 eingepflegt werden. Dazu kann das externe Steuermodul 110 auch eine Kamera aufweisen, mittels welcher direkt Fotos von Etiketten und/oder Flaschen gemacht werden können. Es versteht sich, dass die Bilder aber auch auf andere Art und Weise in das externe Steuermodul 110 geladen werden können, wie beispielsweise direkt von einem Benutzer mittels des externen Steuermodul 110 generiert, oder über Datentransfer in das externe Steuermodul 110.

Wenn das HMI 105 nur proprietäre Dateiformate verarbeiten kann, so kann das externe Steuermodul 110 dazu ausgelegt sein, mittels einer internen oder externen Kamera direkt Fotos in dem proprietären Dateiformat aufzunehmen. Alternativ oder zusätzlich kann das externe Steuermodul 110 auch standardisierte Dateiformate (z.B. *.jpg, *.gif, *.png, usw.) in proprietäre und/oder spezielle Dateiformate umwandeln, welche von dem HMI 105 unterstützt werden. Dies geschieht bevor ein HMI-Datensatz in das HMI 105 übertragen wird. Das externe Steuermodul 110 kann auch eine sichere Speicherumgebung aufweisen, in der Dateien erstellt werden können, die dann in das HMI 105 übertragen werden. Die sichere Speicherumgebung verhindert, dass andere Anwendungen in dem externen Steuermodul 110 Zugriff auf Dateien in der sicheren Speicherumgebung haben, wodurch die Sicherheit und der Schutz vor schädlichen Dateien weiter erhöht wird. Zum Beispiel kann in einer Ausführungsform das HMI 105 nur Dateien von dem externen Steuermodul 110 akzeptieren, die von einem Benutzer des externen Steuermoduls 110 in der sicheren Speicherumgebung des externen Steuermoduls erstellt werden, wie beispielsweise Fotos, die von einer Kamera des externen Steuermoduls 110 aufgenommen werden und direkt in die sichere Speicherumgebung abgelegt werden.

Das externe Steuermodul 110 umfasst auch eine virtuelle Umgebung mit einer virtuellen Version des HMI 105. Dadurch wird das externe Steuermodul 110 zunächst eine Auswirkung in dem virtuellen HMI simulieren, die durch das Übertragen von Dateien in das HMI 105 erzielt wird. Sollten beispielsweise schädliche Dateien in das virtuelle HMI geladen werden, so kann das externe Steuermodul 110 dies dank dem virtuellen HMI erkennen, und verhindern, dass diese schädlichen Dateien in das echte HMI 105 geladen werden.

Gemäß einer alternativen Ausführungsform kann das externe Steuermodul 110 Dateien für das HMI 105 auch zuerst an einen Server schicken, der ein virtuelles HMI simuliert und die zu übertragenden Dateien zunächst prüft und dann gegebenenfalls freigibt oder sperrt.

In weiteren Ausführungsform kann das HMI 105 selber in einem gesonderten Speicherbereich ein virtuelles HMI von sich selbst gespeichert haben. Bevor Dateien von dem externen Steuermodul 110 von dem HMI 105 akzeptiert werden, werden diese Dateien von dem HMI 105 zunächst in das virtuelle HMI geladen und dort ausgeführt oder geöffnet. Nur dann, wenn das virtuelle HMI feststellt, dass der erhaltende HMI-Datensatz unschädlich ist, wird der entsprechende HMI-Datensatz von dem HMI 105 akzeptiert.

Zur weiteren Erhöhung der Sicherheit kann sowohl das externe Steuermodul 110, als auch das HMI 105 weitere Mittel zum Überprüfen von HMI-Datensätzen aufweisen, die von dem externen Steuermodul 110 in das HMI 105 übertragen werden. So kann eine Überprüfung von HMI-Datensätzen eine Überprüfung des Datentyps sein. Beispielsweise kann bei dieser Überprüfung der Datentyp des HMI-Datensatzes gegen eine intern gespeicherte Datenbank von Datentypen verglichen werden, um festzustellen, ob das HMI 105 den Datentyp des HMI-Datensatzes unterstützt und/oder verwenden darf.

Das externe Steuermodul 110 kann eine eigens für das HMI 105 hergestellte Vorrichtung sein, die exklusiv für die Kommunikation mit dem HMI 105 ausgelegt ist. In weiteren Ausführungsformen kann das externe Steuermodul 110 auch ein Mobiltelefon und/oder ein Tablet-Computer sein, dass entsprechende Software gespeichert hat. Wenn eine solche Software auf dem Mobiltelefon und/oder auf dem Tablet-Computer von einem Prozessor ausgeführt wird, kann das Mobiltelefon und/oder der Tablet-Computer die gleiche oder eine ähnliche Funktionalität aufweisen, wie ein eigens für das HMI 105 bereitgestelltes externes Steuermodul. Die entsprechende Software kann beispielsweise von einem Server oder von einem speziellen Anwendungsserver heruntergeladen und auf dem Mobiltelefon und/oder dem Tablet-Computer installiert werden.

In der weiteren Beschreibung wird als externes Steuermodul sowohl die eigens für das HMI 105 hergestellte Vorrichtung, als auch ein Mobiltelefon und/oder Tablet-Computer mit entsprechender Software gemeint.

Figur 2 zeigt eine weitere Ausführungsform, die auch alle Elemente aus Figur 1 umfasst und in welcher das externe Steuermodul 110 zusätzlich über ein Netzwerk 204 mit einem Server 202 verbunden sein kann. Für die Verbindung 206 zwischen dem externen Steuermodul 110 und dem Netzwerk 204 können alle gängigen drahtgebundenen und/oder drahtlosen Verbindungsarten genutzt werden. Auch wenn nur ein Server 202 in Figur 2 gezeigt ist, so ist es dennoch verständlich, dass auch mehrere Server in dem Netzwerk 204 vorhanden sein können, mit denen das externe Steuermodul 110 kommunizieren kann.

Das Netzwerk 204 kann sowohl ein lokales Netzwerk in beispielsweise einer Fabrik, oder einer Produktionsstätte sein, als auch ein größer angelegtes Netzwerk, wie beispielsweise das Internet.

Der Server 202 kann verschiedene Funktionen implementiert haben. Beispielsweise kann der Server 202 zu einem Hersteller des HMI 105 und/oder der Industrieanlage 120 gehören. Dadurch kann ein Benutzer des externen Steuermoduls 110 beispielsweise technische Hilfe und Support von dem Server 202 anfordern. Dies ermöglicht beispielsweise, dass ein Mitarbeiter des Herstellers über den Server 202 und das externe Steuermodul 110 einen Remotezugang zu dem HMI 105 erhält, um technische Hilfestellung leisten zu können.

Zusätzlich oder alternativ kann der Server 202 auch ein Archiv-Server und/oder ein Projektierungsrechner sein. Diesen kann das externe Steuermodul 110 dazu nutzen, vom HMI 105 heruntergeladene Daten zu sichern und zu archivieren. Beispielsweise können ganze Projekte von dem HMI 105 auf dem Server 202 zur Projektsicherung gespeichert werden. Gleichzeitig können von dem Server 202 auch Daten (zum Beispiel archivierte Projektsicherungen, Firmware-Updates, Software-Updates, Add-Ons, Visualisierungsprojekte, Benutzeroberflächen usw.) auf das externe Steuermodul 110 heruntergeladen werden und dann in das HMI 105 übertragen werden.

Zusätzlich oder alternativ kann der Server 202 auch ein Sicherheitsserver sein, der eine virtuelle Version des HMI 105 gespeichert hat. Wie oben beschrieben, kann das externe Steuermodul 110 dann Dateien zuerst zu dem Server 202 übertragen. Auf dem Server 202 werden die so erhaltenen Dateien dann zunächst in das virtuelle HMI eingelesen und eine Auswirkung der Dateien simuliert. Der Server 202 kann so feststellen, ob die Dateien schädlich für das HMI 105 und/oder für die Industrieanlage 120 sind. Nur wenn der Server 202 die Dateien als ungefährlich einstuft, können die Dateien anschließend von dem externen Steuermodul 110 in das HMI 105 übertragen werden.

Zusätzlich oder alternativ kann der Server 202 auch ein Anwendungsserver sein. Der Anwendungsserver 202 kann beispielsweise entsprechende Software für das externe Steuermodul 110 bereitstellen. In einer Ausführungsform kann der Anwendungsserver 202 beispielsweise zum Herunterladen einer Anwendung bzw. Applikation (App) für das externe Steuermodul 110 ausgelegt sein, wobei das externe Steuermodul in dieser Ausführungsform ein Mobiltelefon (z.B. Smartphone) und/oder ein Tablet-Computer ist. Beispielsweise kann der Server 202 in diesem Fall der "Google Play Store", der "Apple App Store", oder ein anderer bereits bestehender Anwendungsserver zum Herunterladen von Anwendungen sein.

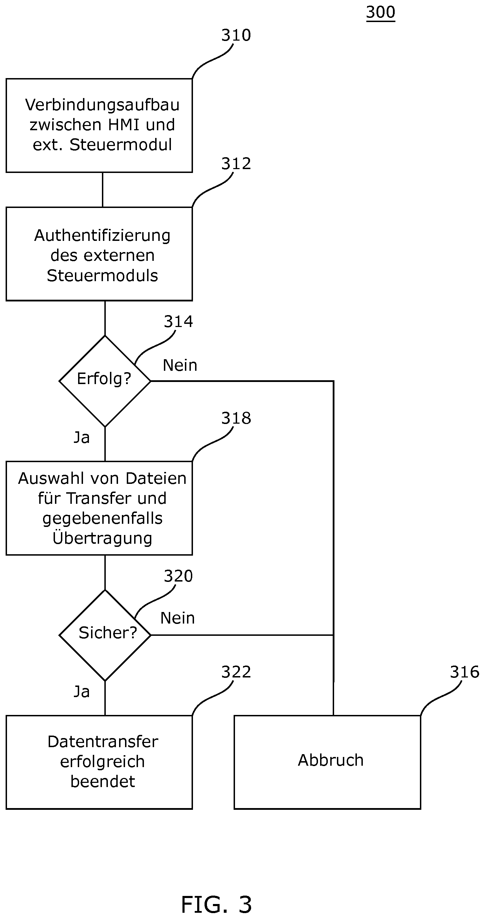

Figur 3 zeigt beispielhaft ein Ablaufdiagramm für ein Verfahren 300, das eine Ausführungsform eines Datentransfers beschreibt.

In Schritt 310 wird versucht ein Verbindungsaufbau zwischen dem HMI 105 und dem externen Steuermodul 110 herzustellen. Die Initiierung des Verbindungsaufbaus wird vorzugsweise von dem externen Steuermodul 110 ausgeführt. In einer Ausführungsform kann es erforderlich sein, dass ein Benutzer des externen Steuermoduls 110 in physischem Kontakt mit dem HMI 105 ist, damit unbefugter Zugriff auf das HMI 105 von außen erschwert wird. Beispielsweise kann ein Benutzer zunächst einen Steuerbefehl direkt in das HMI 105 eingeben, um das HMI 105 auf eine bevorstehende Verbindung mit dem externen Steuermodul 110 vorzubereiten. Das HMI 105 kann sich dann in einem Suchmodus befinden, in welchem es eingehende Verbindungsanfragen von einem externen Steuermodul 110 empfangen kann. Alternativ kann die Initiierung des Verbindungsaufbaus auch von dem HMI 105 direkt ausgeführt werden.

In dem optionalen Schritt 312 kann ein Authentifizierungsprozess für das externe Steuermodul 110 durchgeführt werden. Beispielsweise kann das externe Steuermodul 110 von dem HMI 105 dazu aufgefordert werden, einen Zugangscode an das HMI 105 zu schicken. Auch weitere Authentifizierungsprozesse sind möglich. Ob die Authentifizierung des externen Steuermoduls 110 erfolgreich war, wird in Schritt 314 bestimmt. Falls die Authentifizierung nicht erfolgreich war, wird das Verfahren in Schritt 316 abgebrochen

Nach erfolgreicher Authentifizierung des externen Steuermoduls 110 an dem HMI 105 werden in Schritt 318 Dateien für den Transfer zwischen dem HMI 105 und dem externen Steuermodul 110 ausgewählt und gegebenenfalls vorläufig übertragen. Der Schritt des Auswählens von Dateien, die übertragen werden sollen, wird vorzugsweise in dem externen Steuermodul 110 ausgeführt. Der Schritt des Auswählens von zu übertragenden Dateien kann alternative auch in dem HMI 105 stattfinden.

In dem Fall, dass die Übertragungsrichtung in dem Verfahren 300 von dem externen Steuermodul 110 zu dem HMI 105 ist, können die zu übertragenden Dateien zunächst in einem virtuellen HMI auf Schädlichkeit simuliert werden. Diese Überprüfung kann in dem Server 202, in dem HMI 105 und/oder dem externen Steuermodul 110 selbst stattfinden. Je nachdem, wo diese Überprüfung stattfindet, werden die Dateien entsprechend zuerst dort hin übertragen.

In Schritt 320 wird festgestellt, ob die ausgewählten Dateien sicher sind, d.h. ob sie nicht für das HMI 105 und/oder die Industrieanlage 120 schädlich sind. Sollte festgestellt werden, dass die Dateien schädlich sind, wird das Verfahren 300 in Schritt 316 abgebrochen. Die schädlichen Dateien können dann beispielsweise gelöscht werden und eine entsprechende Meldung kann in dem externen Steuermodul 110 und/oder in dem HMI 105 angezeigt werden.

Wenn in Schritt 320 festgestellt wird, dass die Dateien nicht schädlich sind, wird der Datentransfer in Schritt 322 erfolgreich beendet. Das bedeutet, dass das HMI 105 die ausgewählten Dateien empfängt und entsprechend verarbeitet. In der anderen Übertragungsrichtung bedeutet dies, dass die Dateien erfolgreich von dem HMI 105 in das externe Steuermodul 110 heruntergeladen wurden und dann in dem externen Steuermodul 110 bearbeitet, weitergeleitet, archiviert, oder betrachtet werden können.

Gemäß einer Ausführungsform kann das externe Steuermodul 110 ein Mobilgerät, wie ein Smartphone, Handy und/oder Tablet-Computer sein. Ein Anwender kann mit dem Mobilgerät Bilder zu einer Meldung oder einer Sorte erstellen und mit Hilfe von einer App auf dem Mobilgerät die Daten auf das HMI übertragen.

Im Folgenden wird ein beispielhafter Ablauf einer solchen Ausführungsform beschrieben.

Der Anwender kann mit seinem Mobilgerät auf einen Anwendungsserver zugreifen, wie beispielsweise auf den "Apple App Store" oder den "Google Play Store". Von dort kann er die entsprechende App auf das Mobilgerät herunterladen und installieren, die den Transport von Dateien von einem HMI auf das Mobilgerät, sowie den Transport von Dateien von dem Mobilgerät auf ein HMI erlaubt und steuert.

Mit der entsprechenden heruntergeladenen App kann der Anwender Bilder zu Meldungen, Sorten, Logos etc. erstellen. Die App kann dazu die Kamera des Mobilgeräts benutzen. Die Bilder können auf dem Mobilgerät gespeichert werden und dann auf ein verbundenes HMI übertragen werden. Dies kann eine Zuordnung von Bildern zu Meldungen und Sorten usw. ermöglichen.

Mit der heruntergeladenen App können aber auch Daten von dem HMI auf das Mobilgerät übertragen werden, wie beispielsweise Reports, Sorten, Diagnosefiles oder ein komplettes Visualisierungsprojekt. Über WLAN, Mobilfunk usw. können diese Daten überall hin übertragen werden. Geeignete Daten wie Sorten oder Projektsicherungen können auch wieder vom Mobiltelefon auf das HMI übertragen werden.

Die heruntergeladene App kann auch Verbindung mit einem Projektierungsrechner herstellen und Projektsicherungen einspielen.

Über eine Verbindung ins Internet oder in ein Netzwerk können mit Hilfe der heruntergeladenen App Projektsicherungen usw. in einem Archiv-Server abgelegt werden.

Es wird ferner darauf hingewiesen, dass in den zuvor beschriebenen Ausführungsformen genannte Merkmale nicht auf diese speziellen Kombinationen beschränkt sind, sondern auch in beliebigen anderen Kombinationen als weitere Ausführungsformen möglich sind.

## Patentansprüche

1. Externes Steuermodul (110), insbesondere Mobilgerät, zum Austauschen von Daten mit einem HMI (105) einer Maschine (120) in der Getränkemittelindustrie, wobei das externe Steuermodul ein Mobilgerät ist, wobei die Maschine eine Abfüll-, Etikettier- oder Verpackungsmaschine ist, wobei das HMI zur Benutzereingabe von Steuerungsbefehlen an die Maschine dient und wobei das externe Steuermodul so konfiguriert ist, dass es drahtlos mit dem HMI verbunden werden kann, um mit dem HMI wenigstens einen HMI-Datensatz auszutauschen, wobei:
das externe Steuermodul konfiguriert ist, den wenigstens einen HMI-Datensatz an das HMI oder die Maschine zu senden und der wenigsten eine HMI-Datensatz Daten oder Parameter zum Konfigurieren des HMI umfasst, und
das externe Steuermodul konfiguriert ist, den wenigstens einen HMI-Datensatz von dem HMI oder der Maschine zu empfangen und der wenigsten eine empfangene HMI-Datensatz Daten oder Parameter zur Auswertung oder Speicherung durch das externe Steuermodul umfasst;
wobei:
das externe Steuermodul ein Mobiltelefon oder ein Tablet-Computer ist, welches so konfiguriert ist, dass eine spezielle Anwendung auf dem externen Steuermodul installiert ist, die mit dem HMI oder der Maschine über eine drahtlosen Kommunikationsverbindung oder eine Mobilfunkverbindung kommunizieren kann, die spezielle Anwendung auf dem externen Steuermoduls eingerichtet ist, wenigstens einen HMI-Datensatz zu erstellen und an das HMI oder die Maschine zu übertragen, wobei der wenigstens eine HMI-Datensatz wenigstens eine Bilddatei, einen ausführbaren Maschinenbefehl, eine Tabelle, eine Textdatei, eine Projektsicherungsdatei und/oder ein Visualisierungsprojekt umfasst, und
das externe Steuermodul eine virtuelle Umgebung mit einer virtuellen Version des HMI zum Simulieren von Auswirkungen, die durch das Übertragen von Daten in das HMI erzielt werden umfasst.

2. Externes Steuermodul (110) nach Anspruch 1, wobei eine Syntax des wenigstens einen HMI-Datensatz anzeigt, wie die Daten oder Parameter des wenigstens einen HMI-Datensatz in das HMI (105) zu importieren sind, oder der wenigstens eine HMI-Datensatz mit einem Maschinenbefehl an das HMI oder die Maschine übertragen wird, der angibt, wie die Daten oder Parameter des wenigstens einen HMI-Datensatz in das HMI (105) zu importieren sind.

3. Externes Steuermodul (110) nach einem der Ansprüche 1 oder 2, wobei das externe Steuermodul ein Mobiltelefon oder ein Tablet-Computer ist, welches so konfiguriert ist, dass eine spezielle Anwendung auf dem externen Steuermodul installiert werden kann, die mit dem HMI oder der Maschine über eine drahtlosen Kommunikationsverbindung oder eine Mobilfunkverbindung kommunizieren kann, wobei
die spezielle Anwendung auf dem externen Steuermoduls eingerichtet ist wenigstens einen HMI-Datensatz von dem HMI oder der Maschine zu empfangen, wobei der wenigstens eine empfangene HMI-Datensatz wenigstens einen Report, eine Diagnoseinformation, ein Visualisierungsprojekt, eine Projektsicherungsdatei und/oder einen aktuellen Status umfasst und die spezielle Anwendung eingerichtet ist, den empfangenen HMI-Datensatz zu speichern, auszuwerten oder dessen Daten an einem Bildschirm des externen Steuermoduls anzuzeigen.

4. Verfahren zum Steuern einer Maschine (120) in der Getränkemittelindustrie, wobei die Maschine eine Abfüll-, Etikettier- oder Verpackungsmaschine ist, umfassend:
Herstellen einer drahtlosen Datenverbindung zum Austauschen wenigstens eines HMI-Datensatzes zwischen einem HMI (105) zur Benutzereingabe von Steuerungsbefehlen an die Maschine und einem externen Steuermodul; und
Austauschen wenigstens eines HMI-Datensatzes zwischen dem HMI und dem externen Steuermodul über die Datenverbindung, wobei:
wenn der wenigstens eine HMI-Datensatz von dem externen Steuermodul empfangen wird, der HMI-Datensatz Daten oder Parameter zum Konfigurieren des HMI umfasst, und wenn der wenigstens eine HMI-Datensatz von dem HMI an das externe Steuermodul übertragen wird, der HMI-Datensatz Daten oder Parameter zur Auswertung oder Speicherung umfasst, wobei:
das externe Steuermodul ein Mobiltelefon oder ein Tablet-Computer ist, welches so konfiguriert ist, dass eine spezielle Anwendung auf dem externen Steuermodul installiert werden kann, die mit dem HMI oder der Maschine über eine drahtlosen Kommunikationsverbindung oder eine Mobilfunkverbindung kommunizieren kann,
die spezielle Anwendung auf dem externen Steuermoduls eingerichtet ist, wenigstens einen HMI-Datensatz zu erstellen und an das HMI oder die Maschine zu übertragen, wobei der wenigstens eine HMI-Datensatz wenigstens eine Bilddatei, einen ausführbaren Maschinenbefehl, eine Tabelle, eine Textdatei, eine Projektsicherungsdatei und/oder ein Visualisierungsprojekt umfasst, und
das externe Steuermodul eine virtuelle Umgebung mit einer virtuellen Version des HMI zum Simulieren von Auswirkungen, die durch das Übertragen von Daten in das HMI erzielt werden umfasst.

5. Verfahren nach Anspruch 4, wobei das Verfahren des Weiteren umfasst:
Konfigurieren des HMI (105), wobei das Konfigurieren ein Importieren der Daten oder Parameter eines empfangenen HMI-Datensatzes umfasst, und das Importieren auf einem oder mehreren der nachfolgenden Kriterien basiert:
einem Datentyp der Daten oder Parameter,
einer Syntax des empfangenen HMI-Datensatzes,
eines mit dem empfangenen HMI-Datensatz empfangenen Maschinenbefehls, und
einer Benutzereingabe, die mittels des HMI eingegeben oder von dem externen Steuermodul (110) empfangen wird.

## Claims

1. External control module (110), in particular a mobile device, for exchanging data with an HMI (105) of a machine (120) in the beverage industry, wherein the external control module is a mobile device, wherein the machine is a filling, labelling or packaging machine, wherein the HMI is used for user input of control commands to the machine and wherein the external control module is configured such that it can be wirelessly connected to the HMI in order to exchange at least one HMI data set with the HMI, wherein:
the external control module is configured to send the at least one HMI data set to the HMI or the machine and the at least one HMI data set comprises data or parameters for configuring the HMI, and
the external control module is configured to receive the at least one HMI data set from the HMI or the machine and the at least one received HMI data set comprises data or
parameters for being evaluated or stored by the external control module;
wherein:
the external control module is a mobile phone or a tablet computer which is configured such that a special application is installed on the external control module that can communicate with the HMI or the machine via a wireless communication connection or a mobile connection, the special application on the external control module is designed to create at least one HMI data set and transmit it to the HMI or the machine, wherein the at least one HMI data set comprises at least one image file, an executable machine command, a table, a text file, a project backup file and/or a visualization project, and the external control module comprises a virtual environment having a virtual version of the HMI for simulating effects which are achieved by transmitting data to the HMI.

2. External control module (110) according to claim 1, wherein a syntax of the at least one HMI data set indicates how the data or parameters of the at least one HMI data set are to be imported into the HMI (105), or the at least one HMI data set is transmitted to the HMI or the machine together with a machine command which specifies how the data or parameters of the at least one HMI data set are to be imported into the HMI (105).

3. External control module (110) according to either claim 1 or claim 2, wherein the external control module is a mobile phone or a tablet computer which is configured such that a special application can be installed on the external control module, which application can communicate with the HMI or the machine via a wireless communication connection or a mobile connection, wherein the special application is designed to receive at least one HMI data set from the HMI or the machine, wherein the at least one received HMI data set comprises at least one report, diagnostic information, a visualization project, a project backup file and/or a current status and the special application is designed to store the received HMI data set, evaluate it or display its data on a screen of the external control module.

4. Method for controlling a machine (120) in the beverage industry, wherein the machine is a filling, labelling or packaging machine, comprising:
establishing a wireless data connection for exchanging at least one HMI data set between an HMI (105) for user input of control commands to the machine and an external control module; and
exchanging at least one HMI data set between the HMI and the external control module via the data connection, wherein:
if the at least one HMI data set is received from the external control module, the HMI data set comprises data or parameters for configuring the HMI, and if the at least one HMI data set is transmitted from the HMI to the external control module, the HMI data set comprises data or parameters for being evaluated or stored, wherein:
the external control module is a mobile phone or a tablet computer which is configured such that a special application can be installed on the external control module, which application can communicate with the HMI or the machine via a wireless communication connection or a mobile connection,
the special application on the external control module is designed to create at least one HMI data set and transmit it to the HMI or the machine, wherein the at least one HMI data set comprises at least one image file, an executable machine command, a table, a text file, a project backup file and/or a visualization project, and
the external control module comprises a virtual environment having a virtual version of the HMI for simulating effects which are achieved by transmitting data to the HMI.

5. Method according to claim 4, wherein the method further comprises:
configuring the HMI (105), wherein the configuration comprises importing the data or parameters of a received HMI data set, and the import is based on one or more of the following criteria:
a data type of the data or parameters,
a syntax of the received HMI data set,
a machine command received together with the received HMI data set, and
a user input which is input by means of the HMI or received from the external control module (110).

## Revendications

1. Module de commande externe (110), en particulier un dispositif mobile, pour échanger des données avec une IHM (105) d'une machine (120) dans l'industrie des boissons, dans lequel le module de commande externe est un dispositif mobile, dans lequel la machine est une machine de remplissage, d'étiquetage ou d'emballage, dans lequel l'IHM sert pour une entrée d'utilisateur d'instructions de commande vers la machine, et dans lequel le module de commande externe est configuré pour pouvoir être connecté sans fil à l'IHM afin d'échanger au moins un ensemble de données d'IHM avec l'IHM, dans lequel :
le module de commande externe est configuré pour envoyer au moins un ensemble de données d'IHM à l'IHM ou à la machine et le au moins un ensemble de données d'IHM comprend des données ou des paramètres pour configurer l'IHM, et
le module de commande externe est configuré pour recevoir le au moins un ensemble de données d'IHM depuis l'IHM ou la machine et le au moins un ensemble de données d'IHM reçu comprend des données ou des paramètres pour une évaluation ou un stockage par le module de commande externe ;
dans lequel :
le module de commande externe est un téléphone mobile ou un ordinateur tablette qui est configuré pour avoir une application spéciale installée sur le module de commande externe qui peut communiquer avec l'IHM ou la machine via une liaison de communication sans fil ou une liaison radio mobile,
l'application spéciale sur le module de commande externe est conçue pour créer et transmettre au moins un ensemble de données d'IHM à l'IHM ou à la machine, dans lequel le au moins un ensemble de données d'IHM comprend au moins un fichier d'image, une commande de machine exécutable, un tableau, un fichier de texte, un fichier de sauvegarde de projet et/ou un projet de visualisation, et
le module de commande externe comprend un environnement virtuel avec une version virtuelle de l'IHM pour simuler des effets qui sont obtenus par le transfert de données à l'IHM.

2. Module de commande externe (110) selon la revendication 1, dans lequel une syntaxe du au moins un ensemble de données d'IHM indique comment les données ou les paramètres du au moins un ensemble de données d'IHM doivent être importés dans l'IHM (105), ou le au moins un ensemble de données d'IHM est transmis à l'IHM ou à la machine avec une commande de machine indiquant comment les données ou les paramètres du au moins un ensemble de données d'IHM doivent être importés dans l'IHM (105).

3. Module de commande externe (110) selon l'une quelconque des revendications 1 à 2, dans lequel le module de commande externe est un téléphone mobile ou un ordinateur tablette qui est configuré pour avoir une application spéciale qui peut être installée sur le module de commande externe qui peut communiquer avec l'IHM ou la machine via une liaison de communication sans fil ou une liaison radio mobile, dans lequel
l'application spéciale sur le module de commande externe est conçue pour recevoir au moins un ensemble de données d'IHM depuis l'IHM ou la machine, dans lequel le au moins un ensemble de données d'IHM reçu comprend au moins un rapport, des informations de diagnostic, un projet de visualisation, un fichier de sauvegarde de projet et/ou un état actuel, et l'application spéciale est conçue pour stocker, évaluer ou afficher l'ensemble de données d'IHM reçu sur un écran d'affichage du module de commande externe.

4. Procédé de commande d'une machine (120) dans l'industrie des boissons, dans lequel la machine est une machine de remplissage, d'étiquetage ou d'emballage, comprenant les étapes consistant à :
établir une liaison de données sans fil pour échanger au moins un ensemble de données d'IHM entre une IHM (105) pour une entrée d'utilisateur d'instructions de commande vers la machine et un module de commande externe ; et
échanger au moins un ensemble de données d'IHM entre l'IHM et le module de commande externe via la liaison de données, dans lequel :
lorsque le au moins un ensemble de données d'IHM est reçu depuis le module de commande externe, l'ensemble de données d'IHM comprend des données ou des paramètres pour configurer l'IHM, et
lorsque le au moins un ensemble de données d'IHM est reçu depuis l'IHM, l'ensemble de données d'IHM comprend des données ou des paramètres pour une évaluation ou
un stockage, dans lequel :
le module de commande externe est un téléphone mobile ou un ordinateur tablette qui est configuré pour avoir une application spéciale installée sur le module de commande externe qui peut communiquer avec l'IHM ou la machine via une liaison de communication sans fil ou une liaison radio mobile,
l'application spéciale sur le module de commande externe est conçue pour créer et transmettre au moins un ensemble de données d'IHM à l'IHM ou à la machine, dans lequel le au moins un ensemble de données d'IHM comprend au moins un fichier d'image, une commande de machine exécutable, un tableau, un fichier de texte, un fichier de sauvegarde de projet et/ou un projet de visualisation, et
le module de commande externe comprend un environnement virtuel avec une version virtuelle de l'IHM pour simuler des effets qui sont obtenus par transfert de données à l'IHM.

5. Procédé selon la revendication 4, dans lequel le procédé comprend en outre les étapes consistant à :
configurer l'IHM (105), dans lequel la configuration comprend une importation des données ou des paramètres d'un ensemble de données d'IHM reçu, et l'importation est basée sur un ou plusieurs des critères suivants :
un type de données des données ou des paramètres,
une syntaxe de l'ensemble de données d'IHM reçu,
une commande de machine reçue avec l'ensemble de données d'IHM reçu, et
une entrée d'utilisateur au moyen de l'IHM ou reçue depuis le module de commande externe (110).
